# EUROPÄISCHE PATENTANMELDUNG

(11) **EP 4 311 089 A1**
(43) Veröffentlichungstag der Anmeldung: **24.01.2024**
(21) Anmeldenummer: 22186420.0
(22) Anmeldetag: 22.07.2022
(51) Int. Cl.: H02K 15/06

(54) **EINZIEHEN EINER WICKLUNG IN EINEN MAGNETISIERBAREN FLUSSLEITKÖRPER EINES STÄNDERS EINER ALS INNENLÄUFER AUSGEBILDETEN ROTIERENDEN ELEKTRISCHEN MASCHINE**

(71) Anmelder: Siemens Aktiengesellschaft, 80333 München (DE)
(72) Erfinder: Büttner, Klaus, 97618 Hollstadt (DE); Kirchner, Klaus, 97645 Ostheim (DE); Warmuth, Matthias, 97618 Windshausen (DE)
(74) Vertreter: Siemens Patent Attorneys

(57) **Zusammenfassung**

Die Erfindung betrifft ein Verfahren zum Einziehen einer Wicklung (12) in einen magnetisierbaren Flussleitkörper (10) eines Ständers, wobei der magnetisierbare Flussleitkörper (10) zu einer Aufnahmeöffnung (14) offene Längsnuten (16) aufweist, wobei Windungen (18) der Wicklung in Vorrichtungsnuten (20) einer Vorrichtungshülse (22) einer Wickelvorrichtung (24) angeordnet werden, wobei ein Wicklungsende (28) ausgebildet wird, innerhalb der Vorrichtungshülse (22) ein axial bewegbarer Vorrichtungsstempel (30) angeordnet wird, die Vorrichtungshülse mit einem Hülsenende (26) koaxial zur Aufnahmeöffnung (14) angeordnet wird, und der Vorrichtungsstempel axial durch die Aufnahmeöffnung hindurchbewegt wird. Erfindungsgemäß wird ein erstes Teilpaket (38) an Windungen mittels eines ersten Stempelkopfes (32) des Vorrichtungsstempels durch die Aufnahmeöffnung hindurchführt, und wenigstens ein zweites Teilpaket (40) an Windungen mittels eines zweiten Stempelkopfes (34) des Vorrichtungsstempels durch die Aufnahmeöffnung hindurchführt.

## Beschreibung

Die Erfindung betrifft ein Verfahren zum Einziehen einer Wicklung in einen magnetisierbaren Flussleitkörper eines Ständers einer als Innenläufer ausgebildeten rotierenden elektrischen Maschine, wobei der magnetisierbare Flussleitkörper eine Aufnahmeöffnung zum Aufnehmen eines drehbar gelagerten Läufers der rotierenden elektrischen Maschine und öffnungsseitig offene Längsnuten zum Anordnen der Wicklung aufweist, wobei Windungen der Wicklung in vorgegebener Weise in Vorrichtungsnuten einer Vorrichtungshülse einer Wickelvorrichtung angeordnet werden, wobei die Vorrichtungsnuten über einen Umfang der Vorrichtungshülse ausgebildet sind und hinsichtlich ihrer radialen Erstreckung und ihrer Erstreckung in Umfangsrichtung an die Längsnuten angepasst sind, wodurch in einem Bereich eines ersten axialen Hülsenendes der Vorrichtungshülse ein erstes axiales Wicklungsende der Wicklung ausgebildet wird, innerhalb der Vorrichtungshülse ein axial bewegbarer Vorrichtungsstempel entfernt vom ersten axialen Hülsenende angeordnet wird, die Vorrichtungshülse mit ihrem ersten axialen Hülsenende koaxial zu der Aufnahmeöffnung angeordnet wird, der Vorrichtungsstempel axial in Richtung der Aufnahmeöffnung durch die Aufnahmeöffnung hindurchbewegt wird. Ferner betrifft die Erfindung eine Wickelvorrichtung zum Einziehen einer Wicklung in einen magnetisierbaren Flussleitkörper eines Ständers einer als Innenläufer ausgebildeten rotierenden elektrischen Maschine, wobei der magnetisierbare Flussleitkörper eine Aufnahmeöffnung zum Aufnehmen eines drehbar gelagerten Läufers der rotierenden elektrischen Maschine und öffnungsseitig offene Längsnuten zum Anordnen der Wicklung aufweist, mit einer Vorrichtungshülse, die Vorrichtungsnuten zum Anordnen von Windungen der Wicklung in einer vorgegebenen Weise aufweist, wobei die Vorrichtungsnuten über einen Umfang der Vorrichtungshülse ausgebildet sind und hinsichtlich ihrer radialen Erstreckung und ihrer Erstreckung in Umfangsrichtung an die Längsnuten angepasst sind, um in einem Bereich eines ersten axialen Hülsenendes der Vorrichtungshülse ein erstes axiales Wicklungsende der Wicklung auszubilden, und einem Vorrichtungsstempel, der innerhalb der Vorrichtungshülse axial bewegbar angeordnet und ausgebildet ist, axial in Richtung der Aufnahmeöffnung durch die Aufnahmeöffnung hindurchbewegt zu werden, wenn die Vorrichtungshülse mit ihrem ersten axialen Hülsenende koaxial zu der Aufnahmeöffnung angeordnet ist.

Gattungsgemäße elektrische Maschinen, Ständer hierfür sowie Verfahren und Wickelvorrichtungen hierfür sind dem Grunde nach im Stand der Technik bekannt, also dass es eines gesonderten druckschriftlichen Nachweises nicht bedarf. Bei einer rotierenden elektrischen Maschine ist dem Grunde nach ein Ständer als Stator vorgesehen, der in der Regel eine im Wesentlichen kreisförmige Öffnung zur Aufnahme eines als Rotor ausgebildeten Läufers bereitstellt. In der Öffnung ist der Läufer drehbar gelagert angeordnet, wobei zwischen dem Läufer und dem Ständer ein Luftspalt ausgebildet ist.

Eine rotierende elektrische Maschine ist eine Vorrichtung, die elektrische Energie in mechanische Energie, insbesondere Bewegungsenergie (Motorbetrieb) und/oder mechanische Energie in eine elektrische Energie (Generatorbetrieb) umformt. Bei der Bewegung handelt es sich in der Regel um eine Drehbewegung, die vom Läufer ausgeführt wird. Der Ständer ist im Unterschied zum Läufer drehfest angeordnet, das heißt, bei der Drehbewegung handelt es sich um eine Drehbewegung des Läufers gegenüber dem Ständer. Der Ständer und der Läufer sind mittels eines magnetischen Flusses verkettet, wodurch im Motorbetrieb die Kraftwirkung, nämlich das Drehmoment erzeugt wird, die den Läufer gegenüber dem Ständer drehend antreibt, und im Generatorbetrieb dem Läufer zugeführte mechanische Energie in Form einer Rotation in elektrische Energie umwandelt. Zu diesem Zweck weist zumindest der Ständer und gegebenenfalls auch der Läufer eine von einem elektrischen Strom durchflossene Wicklung auf. Im Ständer oder im Läufer kann die Wicklung auch durch einen Permanentmagneten gebildet oder ergänzt sein.

Rotierende elektrische Maschinen der gattungsgemäßen Art sind beispielsweise Gleichspannungsmaschinen, beispielsweise Nebenschluss- oder Reihenschlussmaschinen, die im bestimmungsgemäßen Betrieb mit einer elektrischen Gleichspannung beziehungsweise einem elektrischen Gleichstrom beaufschlagt werden, Wechselspannungsmaschinen, die mit einer elektrischen Wechselspannung beziehungsweise einem elektrischen Wechselstrom beaufschlagt werden, insbesondere Drehfeldmaschinen, die an ein mehrphasiges, insbesondere dreiphasiges elektrisches Wechselspannungsnetz angeschlossen sind, wie beispielsweise Asynchronmaschinen, Synchronmaschinen, Synchronmaschinen mit Dämpferkäfig, oder dergleichen.

Zumindest der Ständer weist in der Regel einen magnetisierbaren Flussleitkörper auf. Der magnetisierbare Flussleitkörper dient dazu, im bestimmungsgemäßen Betrieb einen magnetischen Fluss zumindest teilweise zu führen, um die gewünschte Maschinenfunktion zu erreichen oder zumindest zu unterstützen. Der magnetisierbare Flussleitkörper kann zum Beispiel ein Blechpaket aufweisen, das seinerseits aus einzelnen, untereinander elektrisch isolierten ferromagnetischen beziehungsweise magnetisierbaren Blechen besteht. Die Bleche können je nach Verwendungszweck auch als Dynamoblech, Motorenblech, Transformatorenblech oder dergleichen bezeichnet sein. Derartige Bleche unterliegen der Normung, beispielsweise EN10106, EN10107 oder dergleichen. In das Blechpaket eingelassen sind Nuten, die in der Regel als Längsnuten ausgebildet sind und die im Wesentlichen parallel zu einer Längsachse beziehungsweise Drehachse des Läufers oder auch geschrägt hierzu ausgebildet sein können. In den Längsnuten sind stromführende Windungen der Wicklung, insbesondere der Ständerwicklung, die einen magnetischen Fluss bereitstellen, angeordnet. Die Wicklung des Ständers ist somit häufig in das Blechpaket integriert ausgeführt.

Der Ständer nimmt die Reaktion in Bezug auf ein Läuferdrehmoment auf und stützt sich gegen eine Auflage ab, um drehfest angeordnet zu sein. Die Abstützung kann durch ein Fundament oder dergleichen Auflage gebildet sein. Das Blechpaket bezeichnet also einen aus ferromagnetischen Werkstoffen hergestellten und damit magnetisierbaren, schichtweise aufgebauten Körper, und zwar den magnetisierbaren Flussleitkörper. Die Aufgabe des magnetisierbaren Flussleitkörpers besteht darin, in Verbindung mit der stromdurchflossenen Wicklung den magnetischen Fluss zu bündeln. Der magnetisierbare Flussleitkörper kann jedoch auch einen Körper aus einem magnetisierbaren Ferritmaterial oder dergleichen aufweisen.

Das Herstellen einer Ständerwicklung für die rotierende elektrische Maschine umfasst in der Regel, dass die Wicklung, das heißt Windungen der Wicklung beziehungsweise der Ständerwicklung, in dafür vorgesehene in der Regel als Längsnuten ausgebildete Durchgangsöffnungen angeordnet werden. Bei rotierenden elektrischen Maschinen im Bereich der kleinen und der mittleren Leistung kommen häufig Wicklungen zum Einsatz, die aus einem oder mehreren Runddrähten gebildet sind, die - im Unterschied zu Stabwicklungen - in die entsprechenden Längsnuten eingezogen werden können. So offenbart zum Beispiel die WO 2020/058048 A1 das Einziehen von Wicklungen in ein Statorblechpaket.

Es ist beispielsweise bekannt, Windungen der Wicklung, insbesondere wenn sie aus einem einzigen elektrischen Leiter in Form eines Runddrahtes oder dergleichen hergestellt werden, auf eine Schablone zu wickeln und im Anschluss daran die Wicklung beziehungsweise die Windungen mittels Nutspalten in die Längsnuten einzubringen. Im magnetisierbaren Flussleitkörper beziehungsweise Ständer angeordneten Zustand weist die Wicklung an den axialen Enden des Ständers beziehungsweise des magnetisierbaren Flussleitkörpers jeweils einen Wicklungskopf auf. Bei dem vorgenannten Verfahren sind ein großer Anteil der Windungen sowie auch Abschnitte, die einem der beiden Wicklungsköpfe zugeordnet ist, in der Regel unkontrolliert außerhalb der Schablone. Beim Einziehen der jeweiligen Windungen in die jeweiligen Längsnuten kann eine vorgegebene Anordnung der einzelnen Windungen nicht gewährleistet werden. Es können folglich in den Längsnuten Überkreuzungen einzelner Windungen auftreten, wodurch sich ein Verlust an Füllgrad in den jeweiligen Längsnuten ergeben kann. Dadurch können zum Beispiel in Bezug auf eine jeweilige Windung abweichende elektrische Spannungen in Bezug auf benachbart angeordnete Windungen im bestimmungsgemäßen Betrieb auftreten. Darüber hinaus besteht die Gefahr, dass eine Bindungsisolierung geschwächt oder beschädigt wird.

Die WO 2020/058048 A1 befasst sich dagegen damit, eine sogenannte gelegte Wicklung mit einer definierten Anordnung der einzelnen Windungen in die Längsnuten einziehen zu können. Hierzu wird unter anderem ein spezifisches Wickelwerkzeug mit Werkzeugnuten eingesetzt, die auf einem äußeren Umfang eines Werkzeugkerns ausgebildet sind und in denen die einzelnen Windungen der Wicklung angeordnet werden.

Auch wenn sich der Stand der Technik dem Grunde nach bewährt hat, so verbleiben dennoch Nachteile. Einerseits erweisen sich die Verfahren des Stands der Technik als aufwendig und teuer, wohingegen andererseits insbesondere beim Einsatz des die Schablone nutzenden Verfahrens das Problem besteht, dass eine Windungslänge einer einzelnen Windung mit einem Übermaß ausgelegt werden muss, damit im folgenden Einziehvorgang die zuerst eingezogene Windung es aufgrund der Windungslänge erlaubt, die zuletzt eingezogene Windung vollständig in die Längsnut einziehen zu können. Hierdurch wird jedoch ein Übermaß in Bezug auf eine Windungslänge der einzelnen Windungen benötigt, welches nicht nur zu elektrischen Verlusten führen kann, sondern auch eine entsprechend große Ausbildung eines jeweiligen der Wicklungsköpfe zur Folge haben kann. Dies kann sich darüber hinaus auch nachteilig für die Stabilität der Wicklungsköpfe im bestimmungsgemäßen Betrieb auswirken, weil die einzelnen Windungen jeweiligen Kräften ausgesetzt sind.

Der Erfindung liegt die Aufgabe zugrunde, ein gattungsgemäßes Verfahren dahingehend weiterzubilden, dass der Materialaufwand für die Wicklung reduziert werden kann, insbesondere auch eine Größe des Wicklungskopfes reduziert werden kann. Darüber hinaus ist es Aufgabe der Erfindung, eine entsprechende Wickelvorrichtung anzugeben.

Als Lösung werden mit der Erfindung ein Verfahren und eine Vorrichtung gemäß den unabhängigen Ansprüchen vorgeschlagen.

Vorteilhafte Weiterbildungen ergeben sich durch Merkmale der abhängigen Ansprüche.

In Bezug auf ein gattungsgemäßes Verfahren wird mit der Erfindung insbesondere vorgeschlagen, dass ein erster Stempelkopf des Vorrichtungsstempels ein erstes Teilpaket an Windungen des ersten Wicklungsendes durch die Aufnahmeöffnung hindurchführt, wodurch das erste Teilpaket der Windungen in die Längsnuten eingezogen wird, und wenigstens ein zweiter Stempelkopf des Vorrichtungsstempels, der vom ersten Stempelkopf in axialer Richtung beabstandet ist, ein zweites Teilpaket an Windungen des ersten Wicklungsendes durch die Aufnahmeöffnung hindurchführt, wodurch das zweite Teilpaket der Windungen in die Längsnuten eingezogen wird.

In Bezug auf eine gattungsgemäße Vorrichtung wird mit der Erfindung insbesondere vorgeschlagen, dass der Vorrichtungsstempel einen ersten Stempelkopf, der ausgebildet ist, ein erstes Teilpaket an Windungen des ersten Wicklungsendes durch die Aufnahmeöffnung hindurchzuführen, um das erste Teilpaket der Windungen in die Längsnuten einzuziehen, und wenigstens einen zweiten Stempelkopf aufweist, der vom ersten Stempelkopf in axialer Richtung beabstandet ist und der ausgebildet ist, ein zweites Teilpaket an Windungen des ersten Wicklungsendes durch die Aufnahmeöffnung hindurchzuführen, um das zweite Teilpaket der Windungen in die Längsnuten einzuziehen. Die Erfindung basiert unter anderem auf dem Gedanken, dass die Wicklung nicht mehr in einem einzigen Verfahrensschritt mit lediglich einem einzigen Stempelkopf durch die Längsöffnung hindurchgeführt wird, um die Windungen in die Längsöffnungen einzuziehen, sondern dass durch Teilen der Wicklung der wenigstens zwei Wicklungs- beziehungsweise Teilpakete von Windungen und ein nacheinander durchgeführtes Hindurchführen der Teilpakete erreicht werden kann, dass unter anderem die Windungslänge der jeweiligen einzelnen Windungen reduziert werden kann, wodurch zugleich auch eine Größe der Wicklungsköpfe reduziert werden kann. Die Erfindung stellt somit dem Grunde nach ein gestaffeltes Einziehen der Ständerwicklung in den magnetisierbaren Flussleitkörper beziehungsweise den Ständer bereit. Diesem Zweck dient auch die erfindungsgemäße Wickelvorrichtung, die dementsprechend einen Stempel mit zwei voneinander beabstandeten Stempelköpfen aufweist, die jeweils für sich genommen die jeweiligen ersten Wicklungsenden der Teilpakete durch die Aufnahmeöffnung hindurchführen können und dabei zugleich die jeweiligen Windungen in die Längsnuten des magnetisierbaren Flussleitkörpers einziehen können. Dies erlaubt es, die jeweiligen Windungslängen zu reduzieren, wodurch nicht nur Materialaufwand eingespart werden kann, sondern auch eine kleinere Konstruktion der Wicklungsköpfe erreicht werden kann. Die Erfindung ermöglicht es daher ein, insbesondere schablonenbasiertes, Einziehverfahren zu verbessern.

Der gestaffelte Einzug gemäß der Erfindung erlaubt es, das Vergrößern der mittleren Windungslänge weitgehend zu vermeiden beziehungsweise den sich hieraus ergebenden Effekt klein zu halten, wodurch unter anderem auch eine Reduzierung eines Wicklungswiderstands erreicht werden kann, der sich in einem vergrößerten Wirkungsgrad äußern kann. Zugleich können natürlich auch Einzugskräfte während des Einziehvorgangs reduziert werden. Darüber hinaus ist zu bedenken, dass bei einem Einziehen eines gesamten Wicklungsstrangs in eine einzelne Nut in einem einzigen Fertigungsschritt große Einzugskräfte auftreten können. Dies kann ein Verformen, Dehnen oder eine Beschädigung eines oder mehrerer der Wicklungsdrähte zur Folge haben. Reduziert werden kann dieses Problem durch Vergrößern eines Nutschlitzes einer jeweiligen Längsnut. Das ist jedoch in der Regel unerwünscht, weil sich ein breiter Nutschlitz ungünstig auf einen Wirkungsgrad der rotierenden elektrischen Maschine auswirken kann. Daher ist ein schmaler Nutschlitz in der Regel vorteilhaft. Mit dem durch die Erfindung ermöglichten gestaffelten Einziehen der Wicklung beziehungsweise der Wicklungsdrähte kann erreicht werden, dass auch bei schmalen Nutschlitzen lediglich kleine Einzugskräfte beim Einziehen der Wicklung beziehungsweise der Wicklungsdrähte in die Längsnut aufgebracht zu werden brauchen. Die insbesondere in Bezug auf schmale Nutschlitze genannten Nachteile können damit, besonders bei vergleichsweise etwa gleicher Nutfüllung, weitgehend vermieden werden.

Die Vorrichtungshülse ist vorliegend vorzugsweise an die Aufnahmeöffnung angepasst ausgebildet, sodass die Vorrichtungsnuten, in denen die Windungen der Wicklung in der vorgegebenen Weise angeordnet sind, den Längsnuten gegenüberliegend angeordnet werden können. Die Wicklung kann Windungen aus einem elektrisch leitfähigen Draht, insbesondere einem Runddraht, aufweisen. Der Draht kann aus einem Werkstoff gebildet sein, der Kupfer, Aluminium, Silber oder Legierungen hiervon aufweist. Dadurch kann auf einfache Weise erreicht werden, dass zum Beispiel die Windungen von einer jeweiligen Vorrichtungsnut in eine jeweilige gegenüberliegende Längsnut des magnetisierbaren Flussleitkörpers eingezogen werden können. Die Vorrichtungshülse ist daher vorzugsweise ebenso wie die Aufnahmeöffnung im Wesentlichen kreisförmig ausgebildet.

Zu diesem Zweck ist vorgesehen, dass die Vorrichtungshülse mit ihrem ersten axialen Hülsenende koaxial zur Aufnahmeöffnung angeordnet ist, und ihr insbesondere gegenüberliegt. Dabei ist dann zugleich auch eine entsprechende Drehwinkelanpassung möglich, mit der erreicht werden kann, dass die Vorrichtungsnuten der jeweiligen Längsnuten in Umfangsrichtung tatsächlich auch gegenüberliegen. Es versteht sich, dass die Längsnuten an den stirnseitigen axial gegenüberliegenden Enden des magnetisierbaren Flussleitkörpers in axialer Richtung offen sind, damit die Windungen in axialer Richtung aus dem magnetisierbaren Flussleitkörper zum Ausbilden der jeweiligen Wicklungsköpfe herausragen können.

Hinsichtlich der radialen Erstreckung und der Erstreckung in Umfangsrichtung sind die Vorrichtungsnuten im Wesentlichen auch vorzugsweise an die Längsnuten angepasst ausgebildet, sodass die Windungen einer jeweiligen Vorrichtungsnut mittels des Stempels auf einfache Weise und weitgehend ohne Hindernis in die jeweilige Längsnut eingezogen werden können.

Die Vorrichtungshülse ist vorzugsweise mit einer zentralen axialen Durchgangsöffnung ausgerüstet, in der der Vorrichtungsstempel angeordnet ist. Der Vorrichtungsstempel ist in axialer Richtung bewegbar angeordnet und weist insbesondere einen Außendurchmesser auf, der etwa einem Innendurchmesser der Vorrichtungshülse entspricht. Die Vorrichtungsnuten sind zumindest teilweise radial durchgängig ausgebildet, sodass die einzelnen Windungen beim Vorbereiten des Einziehvorgangs auf die Vorrichtungshülse aufgebracht beziehungsweise angeordnet beziehungsweise eingehängt werden können. Insbesondere hülseninnenseitig angeordnete Abschnitte der Windungen können dadurch durch den Stempel erfasst und axial entlang der Vorrichtungsnuten bewegt werden, bis die Windungen an die Längsnuten übergeben werden. Durch Weiterbewegen des Stempels durch die Aufnahmeöffnung hindurch werden somit zugleich die Windungen in Längsnuten eingezogen.

Am gegenüberliegenden Ende des magnetisierbaren Flussleitkörpers ragen die innenseitig der Hülse angeordneten Windungsabschnitte dann heraus, sodass sie zumindest teilweise den jeweiligen späteren Wicklungskopf bilden können. Durch die axiale Endposition des Stempels kann somit das Herausragen von Windungsabschnitten aus den jeweiligen Längsnuten bestimmt werden, sodass eine vorgegebene Wicklungskopfausbildung erreicht werden kann.

Die wenigstens zwei Teilpakete können vorzugsweise etwa die gleiche Anzahl an Windungen aufweisen. Es kann jedoch auch vorgesehen sein, dass die Anzahl der Windungen für jedes Teilpaket individuell gewählt ist, sodass die Anzahl der Windungen eines jeweiligen Teilpakets von der eines jeweiligen anderen Teilpakets abweichen kann. Darüber hinaus ist die Erfindung natürlich nicht darauf beschränkt, lediglich zwei Teilpakete mittels zwei Stempelköpfen in den magnetisierbaren Flussleitkörper einzuziehen. Je nach Bedarf kann auch eine höhere Anzahl an Stempelköpfen und eine entsprechende Anzahl von Teilpaketen vorgesehen sein.

Die Stempelköpfe können vorzugsweise in axialer Richtung unabhängig voneinander betätigbar ausgebildet sein. Hierfür kann zum Beispiel vorgesehen sein, dass ein jeweiliger Stempelkopf mittels eines jeweiligen Antriebsstabs betrieben werden kann. Die Antriebsstäbe können beispielsweise als Hülsen ausgebildet sein, die konzentrisch zueinander angeordnet sind. Ein jeweiliger Stempelkopf kann mittels einer elektromagnetischen, hydraulischen und/oder pneumatischen Antriebseinheit angetrieben sein.

Zum Vorbereiten des Einziehvorgangs kann vorgesehen sein, dass bei zwei Stempelköpfen einer der Stempelköpfe innerhalb der Vorrichtungshülse entfernt vom ersten Hülsenende angeordnet ist und der andere der beiden Stempelköpfe außerhalb der Vorrichtungshülse angeordnet ist. Dadurch ist die Möglichkeit geschaffen, die Windungen des zugehörigen Teilpakets auf einfache Weise an der Vorrichtungshülse anzuordnen. Sobald dieses Teilpaket an der Vorrichtungshülse angeordnet ist, kann der andere Stempelkopf in die Hülse hineinverfahren werden, sodass das erste Wicklungsende des bisher angeordneten Wicklungsteilpakets durch diesen Stempelkopf abgedeckt ist, und es können sodann die Windungen des anderen Teilpakets an der Vorrichtungshülse angeordnet werden. Dadurch ist nunmehr die Gesamtwicklung an der Vorrichtungshülse zum gestaffelten Einziehen in die Längsnuten vorbereitet. Die Erfindung ist jedoch nicht hierauf beschränkt und es können auch andere Methoden vorgesehen sein, um die Teilpakete an der Vorrichtungshülse entsprechend anzuordnen. Darüber hinaus ist es für den Fachmann klar ersichtlich, dass eine entsprechende Erweiterung vorzusehen ist, falls mehr als zwei Stempelköpfe zum Einsatz kommen und entsprechend mehrere Teilpakete an der Vorrichtungshülse anzuordnen sind.

Der Abstand der Stempelköpfe in axialer Richtung voneinander ist vorzugsweise an eine axiale Erstreckung der Teilpakete angepasst ausgebildet. Je nach Bedarf kann dieser Abstand auch einstellbar vorgesehen sein.

Insgesamt kann somit festgestellt werden, dass die Erfindung mittels des gestaffelten Einziehens der Wicklung eine Reduktion des Aufwands für die Wicklung erlaubt. Zugleich können die Wicklungsköpfe kleiner und kompakter ausgebildet werden.

Es wird ferner vorgeschlagen, dass eine Nutbreite einer jeweiligen der Längsnuten in Umfangsrichtung öffnungsseitig kleiner als die Nutbreite der jeweiligen Längsnut radial beabstandet von der Öffnung ausgebildet ist, um einen verjüngten Nutbereich auszubilden. Hierdurch kann erreicht werden, dass die Wicklung in einem fertiggestellten Zustand auf einfache Weise mittels eines Nutverschlusses fixiert werden kann. Zugleich ermöglicht es die Erfindung, trotz des verjüngten Bereichs ein zuverlässiges Einziehen der Wicklung zu gewährleisten.

Es wird ferner vorgeschlagen, dass die Stempelköpfe gemeinsam beabstandet voneinander axial in Richtung der Aufnahmeöffnung durch die Aufnahmeöffnung hindurchbewegt werden. So kann zum Beispiel vorgesehen sein, dass die Stempelköpfe mittels eines gemeinsamen Antriebs zeitgleich bewegt werden können. Beispielsweise kann vorgesehen sein, dass die Stempelköpfe eine gemeinsame Antriebsstange aufweisen, mittels der sie axial bewegt werden können. Die Stempelköpfe können in diesem Fall mit der Antriebsstange fest verbunden sein. Dadurch ist auch ein Abstand zwischen den Stempelköpfen fest einstellbar.

Dadurch wird nur ein einziger Antrieb für sämtliche Stempelköpfe benötigt.

Gemäß einer Weiterbildung wird vorgeschlagen, dass zum Anordnen der Windungen der Wicklung in den Vorrichtungsnuten zunächst lediglich ein einziger Stempelkopf entfernt vom ersten axialen Hülsenende in der Vorrichtungshülse angeordnet wird, dann eines der Teilpakete an Windungen in den Vorrichtungsnuten angeordnet wird, danach ein weiterer Stempelkopf entfernt vom ersten axialen Hülsenende in der Vorrichtungshülse angeordnet wird, sodass das erste axiale Wicklungsende des Teilpakets zwischen den beiden Stempelköpfen angeordnet ist und dann ein weiteres der Teilpakete an Windungen in den Vorrichtungsnuten angeordnet wird. Diese Weiterbildung ermöglicht es auf einfache Weise, die Teilpakete der Windungen an der Vorrichtungshülse anzuordnen.

Darüber hinaus wird vorgeschlagen, dass nach dem Einziehen der Wicklung in den magnetisierbaren Flussleitkörper aus dem ersten axialen Wicklungsende ein erster Wicklungskopf und aus einem dem ersten axialen Wicklungsende axial gegenüberliegenden zweiten Wicklungsende ein zweiter Wicklungskopf geformt wird. Somit ist entsprechend an den axial gegenüberliegenden Enden des magnetisierbaren Flussleitkörpers jeweils einer der beiden Wicklungsköpfe angeordnet. Zum Formen des jeweiligen Wicklungskopfes kann ein entsprechendes Formwerkzeug vorgesehen sein, das die entsprechenden Wicklungsenden zum jeweiligen Wicklungskopf formt. Darüber hinaus können natürlich auch mechanische Verbindungsmittel vorgesehen sein, die den jeweils geformten Wicklungskopf in der jeweiligen Form fixieren. Beispielsweise kann hierzu ein Harz, Bänder aus einem elektrisch isolierenden Werkstoff und/oder dergleichen vorgesehen sein.

Weiterhin wird vorgeschlagen, dass zum Einziehen der Wicklung in den magnetisierbaren Flussleitkörper Einziehlamellen eingesetzt werden, die ausgebildet sind, während des Einziehens der Wicklung zumindest teilweise in die Längsnuten hinzuragen. Die Einziehlamellen können beispielsweise aus einem geeigneten Kunststoffmaterial oder dergleichen gebildet sein und nach Art einer Führung die Windungen beim Einziehen in die Nuten führen. Insbesondere kann dadurch vermieden werden, dass die Windungen beim Einziehen an scharfkantigen Rändern des magnetisierbaren Flussleitkörpers beschädigt werden können. Die Einziehlamellen können aber auch eine Reduktion von Einziehkräften zur Folge haben, wodurch die mechanische Beanspruchung der Windungen beim Einziehen reduziert werden kann. Insgesamt kann die Zuverlässigkeit des Verfahrens dadurch weiter verbessert werden.

Gemäß einer weiteren Ausgestaltung wird vorgeschlagen, dass die Stempelköpfe radiale Vorsprünge aufweisen, die ausgebildet sind, beim Hindurchführen der Stempelköpfe durch die Aufnahmeöffnung zumindest teilweise in die Längsnuten einzugreifen. Dadurch kann erreicht werden, dass die Stempelköpfe das Anordnen der Windungen in den Längsnuten beim Einziehen unterstützen. Insbesondere in Zusammenhang mit dem verjüngten Abschnitt kann somit eine besonders zuverlässige Anordnung der Windungen in den Längsnuten erreicht werden. Die radialen Vorsprünge können nach Art von Zähnen, Keilen oder dergleichen ausgebildet sein, die dazu dienen, die Längsnut während des Einziehvorgangs so zu verschließen, dass die jeweils eingezogenen Windungen möglichst nicht aus der Öffnung der Längsnut in die Aufnahmeöffnung ragen können. Die Zuverlässigkeit des Herstellverfahrens dadurch weiter verbessert werden.

Weiterhin wird vorgeschlagen, dass eine Öffnungsbreite der Längsnuten in Umfangsrichtung größer als eine Öffnungsbreite der Vorrichtungsnuten in Umfangsrichtung ist. Dadurch ist es möglich, ein Toleranzband in Bezug auf die Ausrichtung der Längsnuten gegenüber den Vorrichtungsnuten bereitzustellen und so die Zuverlässigkeit der Verfahrensführung weiter zu verbessern. Darüber hinaus kann diese Weiterbildung auch dazu vorgesehen sein, in der Längsnut jeweils zusätzlich eine Nutisolation vorzusehen, die gegebenenfalls gemeinsam mit den Windungen in die jeweilige Längsnut eingezogen werden kann. Insgesamt kann auch hierdurch die Verfahrensführung und die Zuverlässigkeit weiter verbessert werden.

Es wird ferner vorgeschlagen, dass die Stempelköpfe zumindest teilweise unabhängig voneinander bewegbar sind. So kann vorgesehen sein, dass die Stempelköpfe bezüglich eines minimalen und eines maximalen Abstands voneinander bewegbar sind. Dies kann unter anderem vorteilhaft für das Anordnen der Wicklung beziehungsweise der Windungen an der Vorrichtungshülse sein. Durch Einnehmen des maximalen Abstands kann erreicht werden, dass das zweite Teilpaket auf einfache Weise an der Vorrichtungshülse angeordnet werden kann. Der minimale Abstand kann vorteilhaft sein, mit lediglich einem einzigen Antrieb die Stempelköpfe axial bewegen zu können. Insgesamt kann eine weitere Verbesserung der Verfahrensführung erreicht werden.

Ein durch das erfindungsgemäße Verfahren und/oder die Wickelvorrichtung hergestellte dynamoelektrische Maschine weist somit einen vergleichsweise axial kürzen Wickelkopf und einen höheren Wicklungsfüllgrad der Wicklung (z.B. Runddrahtwicklung) in den Nuten der dynamoelektrischen Maschine auf. Damit stellt sich eine gegenüber vergleichbaren dynamoelektrischen Maschinen höhere Effizienz ein, die vor allem als Antrieb für Verdichter, Pumpen, Kompressoren, Lüftern, Förderbänder etc., im industriellen Umfeld, in der Nahrungsmittelindustrie, im medizinischen Sektor und in Fahrzeugen - Straßen- oder Schienengebunden - zum Tragen kommt.

Die für das erfindungsgemäße Verfahren angegebenen Vorteile und Wirkungen gelten natürlich gleichermaßen auch für die erfindungsgemäße Wickelvorrichtung und umgekehrt. Insofern können Vorrichtungsmerkmale auch als Verfahrensmerkmale und umgekehrt formuliert sein.

Bei den im Folgenden erläuterten Ausführungsbeispielen handelt es sich um bevorzugte Ausführungsformen der Erfindung. Die vorhergehend in der Beschreibung angegebenen Merkmale, Merkmalskombinationen sowie auch die in der folgenden Beschreibung von Ausführungsbeispielen genannten und/oder in den Figuren alleine gezeigten Merkmale und Merkmalskombinationen sind nicht nur in der jeweils angegebenen Kombination, sondern auch in anderen Kombinationen verwendbar. Es sind somit auch Ausführungen von der Erfindung umfasst beziehungsweise als offenbart anzusehen, die in den Figuren nicht explizit gezeigt und erläutert sind, jedoch durch separierte Merkmalskombinationen aus den erläuterten Ausführungsformen hervorgehen und erzeugbar sind. Die anhand der Ausführungsbeispiele dargestellten Merkmale, Funktionen und/oder Wirkungen können für sich genommen jeweils einzelne, unabhängig voneinander zu betrachtende Merkmale, Funktionen und/oder Wirkungen der Erfindung darstellen, welche die Erfindung jeweils auch unabhängig voneinander weiterbilden. Daher sollen die Ausführungsbeispiele auch andere Kombinationen als die in den erläuterten Ausführungsformen umfassen. Darüber hinaus können die beschriebenen Ausführungsformen auch durch weitere der bereits beschriebenen Merkmale, Funktionen und/oder Wirkungen der Erfindung ergänzt sein.

In den Figuren bezeichnen gleiche Bezugszeichen gleiche Merkmale und Funktionen.

Es zeigen:
- FIG 1: eine schematisch perspektivische Darstellung eines Blechpakets einer als Innenläufer ausgebildeten rotierenden elektrischen Maschine;
- FIG 2: eine schematische Schnittansicht eines Ausschnitts eines Blechpakets mit drei unterschiedlichen Runddrahtwicklungen, wobei jeweils eine der Längsnuten dargestellt ist;
- FIG 3: eine schematische Schnittansicht eines Einziehwerkzeugs in einem ersten Betriebszustand;
- FIG 4: eine schematische Schnittansicht eines Einziehwerkzeugs in einem zweiten Betriebszustand;
- FIG 5: eine schematische Schnittansicht eines Einziehwerkzeugs in einem dritten Betriebszustand; und
- FIG 6: eine schematische Schnittansicht eines Einziehwerkzeugs in einem vierten Betriebszustand.

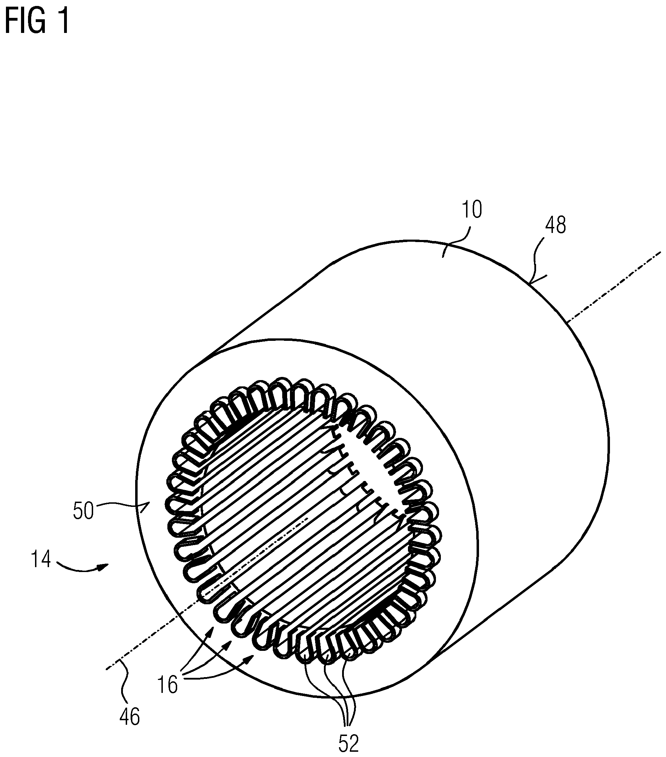

FIG 1 zeigt in einer schematisch perspektivischen Darstellung einen magnetisierbaren Flussleitkörper, der vorliegend durch ein Blechpaket 10 eines nicht weiter dargestellten Ständers einer als Innenläufer ausgebildeten rotierenden elektrischen Maschine gebildet ist. Die elektrische Maschine kann eine Nebenschluss- oder Reihenschlussmaschine, eine Synchronmaschine, eine Asynchronmaschine oder dergleichen sein. Das Blechpaket 10 ist vorliegend im Wesentlichen zylinderförmig mit einem etwa kreisförmigen äußeren Zylinderquerschnitt ausgebildet. Das Blechpaket 10 weist eine Längsachse 46 auf, die zentrisch zum Blechpaket 10 ausgebildet ist. Ferner weist das Blechpaket 10 eine zentrale Aufnahmeöffnung 14 zum Aufnehmen eines ebenfalls nicht dargestellten drehbar gelagerten Läufers der rotierenden elektrischen Maschine auf. Öffnungsseitig weist das Blechpaket 10 offene Längsnuten 16 zum Anordnen einer Wicklung 12 des Ständers auf. Die Längsnuten 16 sind vorliegend in ihrer Längserstreckung parallel zur Längsachse 46 ausgebildet. In alternativen Ausgestaltungen können die Längsnuten jedoch auch zumindest teilweise geschrägt ausgebildet sein. Die Längsachse 46 entspricht einer Drehachse des Läufers. Das Blechpaket 10 stellt an seinen axialen Enden eine erste und eine zweite Stirnseite 48, 50 bereit. In den Längsnuten 16 sind ferner im Querschnitt u-förmig ausgebildete Nutisolationen 52 angeordnet, die ebenfalls öffnungsseitig offen sind.

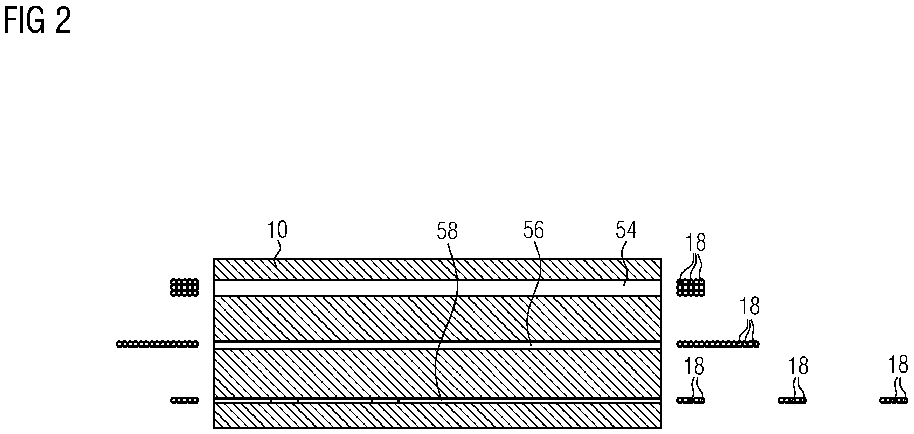

FIG 2 zeigt eine schematische Schnittansicht eines Ausschnitts eines weiteren Blechpakets, bei dem übereinander drei unterschiedliche Nuten 54, 56, 58 von unterschiedlichen Ausgestaltungen ausgebildet sind. In FIG 2 sind lediglich die nach außen sichtbaren Nutschlitze dargestellt, durch die Nuten 54, 56, 58 zur Aufnahmeöffnung 14 hin offen sind. Unterhalb der Nutschlitze weisen die Nuten 54, 56, 58 im Wesentlichen den gleichen Querschnitt auf. Hierbei handelt es sich um schematische Darstellungen für unterschiedliche Ausgestaltungen zum Einführen der Wicklungsdrähte in die Längsnuten, wie eine jeweilige Wicklung 12 beziehungsweise deren Windungen 18 bei unterschiedlichen Konstruktionen angeordnet sein können.

Vorliegend ist vorgesehen, dass in den Nuten 54, 56, 58 Windungen aus Runddraht angeordnet sind, um die jeweilige Wicklung 12 auszubilden. So ist zum Beispiel in der Nut 54 vorgesehen, dass die Runddrahtwicklung mehrschichtig durch den Nutschlitz in die Nut 54 eingezogen werden kann. Herstellungstechnisch ist hier vorgesehen, dass die Windungen 18 als Volleinzug in einem Schritt beim Herstellen des Ständers in die Nut 54 eingezogen werden. Darunter ist in FIG 2 im Blechpaket 10 eine Nut 56 vorgesehen, die im Vergleich zur Nut 54 einen schmal ausgebildeten Nutschlitz aufweist, sodass in der Nut 56 lediglich ein einschichtiges Einführen der Runddrähte der Wicklung 12 möglich ist. Auch hier ist vorgesehen, dass die Windungen 18 der Wicklung 12 in einem einzigen Arbeitsschritt als Volleinzug in die Nut 56 eingezogen werden. Ersichtlich ist, jedoch, dass eine Länge der zugleich in die Nut 56 durch den schmalen Nutschlitz einzuführenden Wicklungsdrähte deutlich größer als bei der Nut 54 ist. Dadurch sind große Einzugskräfte erforderlich.

Darunter ist im Blechpaket 10 eine Nut 58 ausgebildet, die ebenfalls wie die Nut 56 einen schmalen Nutschlitz aufweist und somit hinsichtlich der Abmessungen der Nut 56 entspricht, sodass auch in dieser Nut lediglich ein einschichtiges Einziehen der Windungen 18 der Wicklung 12 möglich ist. Im Unterschied zu den vorhergehenden Nuten 54, 56 ist in dieser Nut 58 vorgesehen, dass die Windungen 18 gestaffelt in zwei oder mehreren Schritten in die Nut 58 eingezogen werden. Durch das gestaffelte Einziehen kann die Länge der zugleich in einem Zug in die Nut 58 durch den schmalen Nutschlitz einzuführenden Wicklungsdrähte deutlich reduziert werden, wodurch unter anderem auch die Einzugskräfte reduziert werden können. Wie sich im Folgenden noch zeigt, ergeben sich hieraus weitere besondere Vorteile für die Herstellung und die Qualität der rotierenden elektrischen Maschine insgesamt.

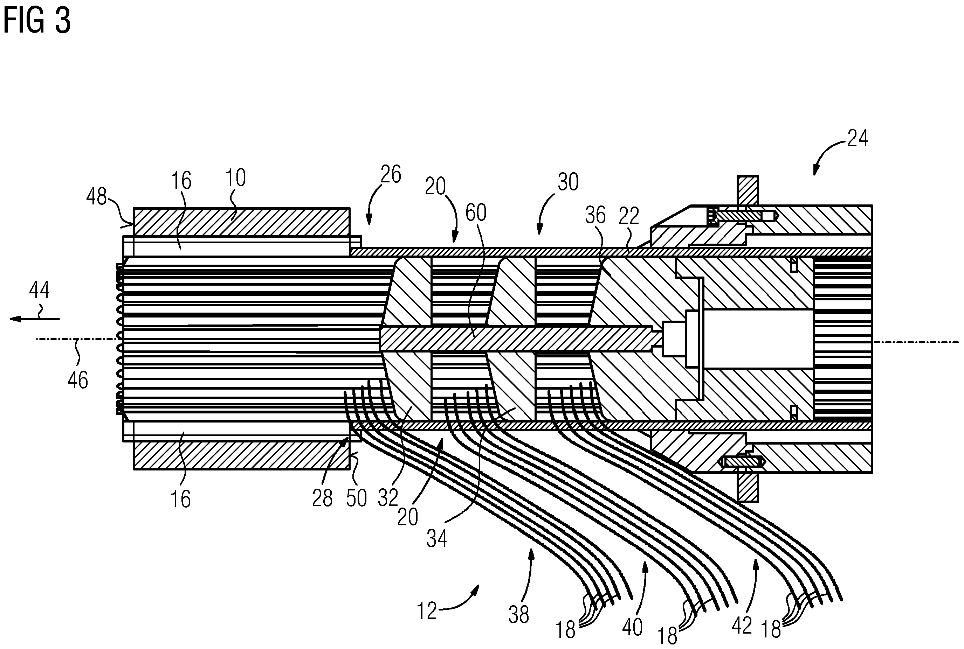

Die FIG 3 bis 6 zeigen im Folgenden ein Verfahren zum Einziehen der Wicklung 12 in das Blechpaket 10 gemäß FIG 1.

Aus FIG 3 ist ersichtlich, dass eine Wickelvorrichtung 24 vorgesehen ist, die dem Einziehen der Wicklung 12 in das Blechpaket 10 dient. Die Wickelvorrichtung 24 ist in einem ersten Betriebszustand dargestellt.

Die Wickelvorrichtung 24 weist eine Vorrichtungshülse 22 auf, die vorliegend im Wesentlichen einen kreisförmigen Außendurchmesser und einen im Wesentlichen kreisförmigen Innendurchmesser aufweist. Die Vorrichtungshülse 22 weist Vorrichtungsnuten 20 zum Anordnen der Windungen 18 der Wicklung 12 in einer vorgegebenen Weise auf. Die Vorrichtungsnuten 20 sind über einen Umfang der Vorrichtungshülse 22 ausgebildet und hinsichtlich ihrer radialen Erstreckung und ihrer Erstreckung in Umfangsrichtung an die Längsnuten 16 angepasst, um in einem Bereich eines ersten axialen Hülsenendes 26 der Vorrichtungshülse ein erstes axiales Wicklungsende 28 der Wicklung 12 auszubilden. Ferner weist die Wickelvorrichtung 24 einen Vorrichtungsstempel 30 auf, der innerhalb der Vorrichtungshülse 22 axial bewegbar angeordnet und ausgebildet ist, axial in Richtung der Aufnahmeöffnung 14 durch die Aufnahmeöffnung 14 hindurchbewegt zu werden, wenn die Vorrichtungshülse 22 mit ihrem ersten axialen Hülsenende koaxial zu der Aufnahmeöffnung angeordnet ist.

Wie aus den gemäß der FIG 3 bis 6 dargestellten weiteren Betriebszuständen hervorgeht, weist der Vorrichtungsstempel einen ersten Stempelkopf auf, der ausgebildet ist, ein im Folgenden noch erläutertes erstes Teilpaket 38 an Windungen 18 des ersten Wicklungsendes 28 durch die Aufnahmeöffnung 14 hindurchzuführen, um das erste Teilpaket 38 der Windungen 18 in die Längsnuten 16 einzuziehen. Ferner weist der Vorrichtungstempel 30 einen zweiten Stempelkopf 34 auf, der vom ersten Stempelkopf 32 in axialer Richtung 44 beabstandet ist und der ausgebildet ist, ein zweites Teilpaket 40 an Windungen 18 des ersten Wicklungsendes 28 durch die Aufnahmeöffnung 14 hindurchzuführen, um das zweite Teilpaket 40 der Windungen 18 in die Längsnuten 16 einzuziehen. Schließlich weist der Vorrichtungsstempel 30 einen dritten Stempelkopf 36 auf, der vom ersten und zweiten Stempelkopf 32, 34 in axialer Richtung 44 beabstandet ist und der ausgebildet ist, ein drittes Teilpaket 42 an Windungen 18 des ersten Wicklungsendes 28 durch die Aufnahmeöffnung 14 hindurchzuführen, um das dritte Teilpaket 42 der Windungen 18 in die Längsnuten 16 einzuziehen.

FIG 3 zeigt die Wickelvorrichtung 24 im zum vor dem Einziehen vorbereiteten ersten Betriebszustand, bei dem die Stempelköpfe 32, 34, 36 noch in der Vorrichtungshülse 22 angeordnet sind. Somit befinden sich auch noch die Teilpakete 38, 40, 42 im Bereich der Vorrichtungshülse 22, und sind insbesondere an den Vorrichtungsnuten 20 angeordnet.

In der vorliegenden Ausgestaltung ist vorgesehen, dass die Stempelköpfe 32, 34, 36 gemeinsam und beabstandet voneinander axial in Richtung der Aufnahmeöffnung 14 durch die Aufnahmeöffnung 14 hindurchbewegt werden können. Zu diesem Zweck ist die Vorrichtungshülse 22 mit ihrem ersten axialen Hülsenende 26 gegenüberliegend zur Stirnseite 50 des Blechpakets 10 angeordnet, sodass eine zentrale Längsachse der Vorrichtungshülse 22 der Längsachse 46 des Blechpakets 10 entspricht.

Aus den FIG 3 bis 6 ist ferner ersichtlich, dass die Stempelköpfe 32, 34, 36 mit einer gemeinsamen Antriebsstange 60 verbunden sind, die ebenfalls koaxial zur Längsachse 46 angeordnet ist. Über die Antriebsstange 60 können die Stempelköpfe 32, 34, 36 gemeinsam axial bewegt werden.

Zum Anordnen der Windungen 18 der Wicklung 12 in den Vorrichtungsnuten 20, wie es in FIG 3 dargestellt ist, wird zunächst lediglich ein einziger Stempelkopf 34 entfernt vom ersten axial Ende 26 in der Vorrichtungshülse 22 angeordnet. Die beiden anderen Stempelköpfe 32, 34 befinden sich zu diesem Zeitpunkt noch außerhalb der Vorrichtungshülse 22. Sodann werden die Windungen 18 des dritten Teilpakets 42 in den Vorrichtungsnuten 20 angeordnet beziehungsweise eingehängt. Danach wird ein weiterer Stempelkopf 32 entfernt vom ersten axialen Hülsenende in der Vorrichtungshülse 22 angeordnet. Dabei kommt das erste axiale Wicklungsende 28 des Teilpakets 42 zwischen den beiden Stempelköpfen 34 und 36 zum Anliegen. Nun wird das zweite der Teilpakete 38 an Windungen 18 in den Vorrichtungsnuten 20 angeordnet. Daraufhin wird der erste Stempelkopf 32 entfernt vom ersten axialen Hülsenende 26 in der Vorrichtungshülse 22 angeordnet, sodass das erste axiale Wicklungsende 28 des zweiten Teilpakets 40 zwischen den beiden Stempelköpfen 32 und 34 angeordnet ist. Sodann wird das erste der Teilpakete 38 an Wicklungen 18 in den Vorrichtungsnuten 20 angeordnet beziehungsweise eingehängt. Die Bewegung der Stempelköpfe 32, 34, 36 erfolgt hierzu entgegen dem Pfeil 44, der parallel zur Längsachse 46 ist. Auf diese Weise kann der erste Betriebszustand der Wickelvorrichtung 24 hergestellt werden, wie er in FIG 3 gezeigt ist.

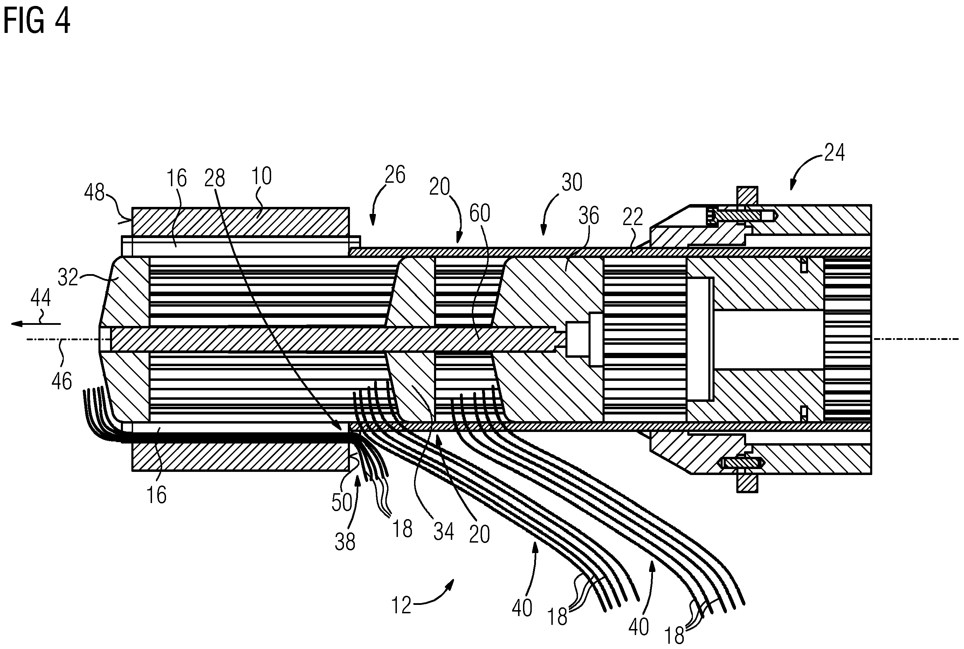

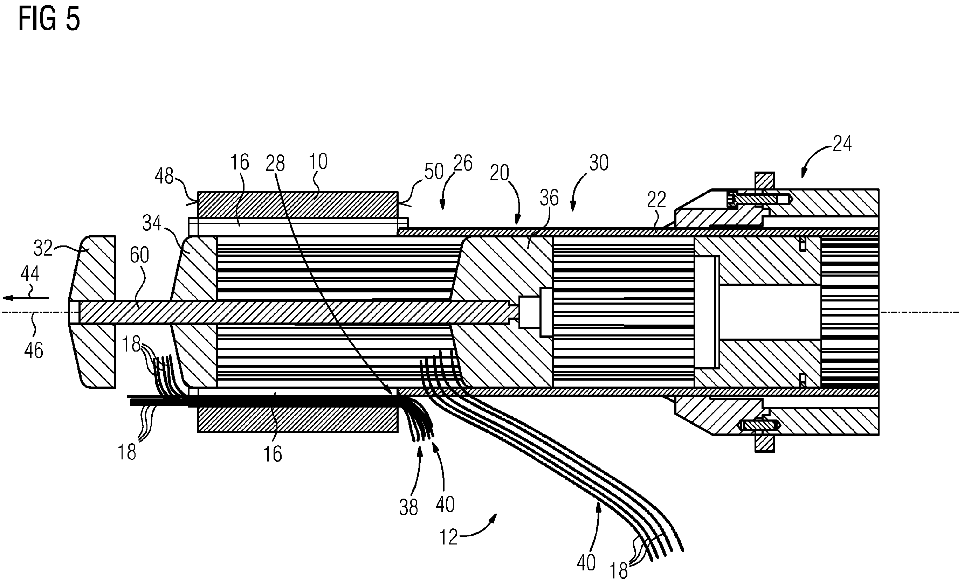

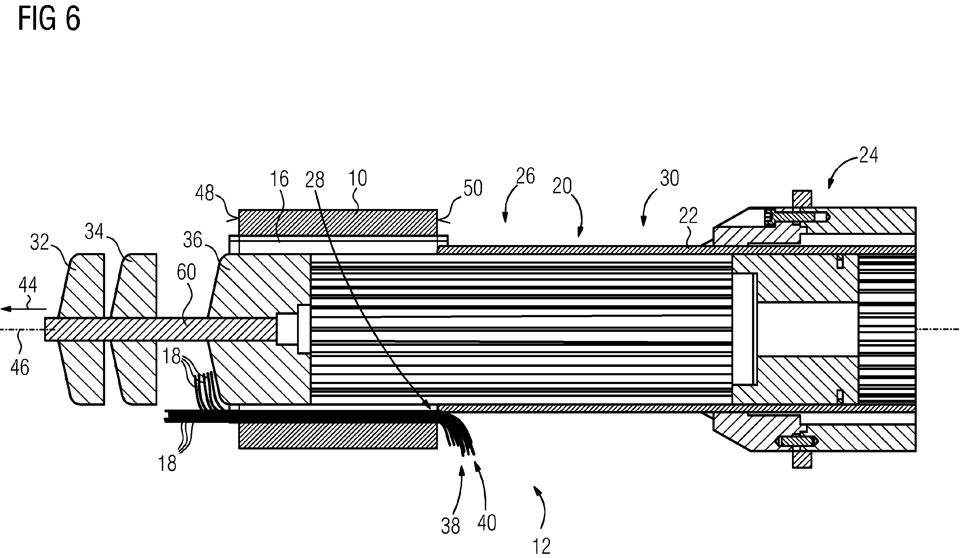

Die FIG 4 bis 6 zeigen nun, wie die Stempelköpfe 32, 34, 36 nacheinander durch die Aufnahmeöffnung 14 hindurchgeführt werden, wobei dadurch die jeweiligen Windungen 18 der jeweiligen Teilpakete 38, 40, 42 in die Längsnuten 16 eingezogen werden. FIG 4 zeigt eine Darstellung wie FIG 3, bei der jedoch in einem zweiten Betriebszustand der erste Stempelkopf 32 nunmehr durch die Aufnahmeöffnung 14 des Blechpakets 10 hindurchgezogen ist. FIG 5 zeigt nun eine weitere schematische Darstellung wie FIG 4, bei der der zweite Stempelkopf 34 nunmehr in einem dritten Betriebszustand ebenfalls durch die Aufnahmeöffnung 14 hindurchgezogen ist. Der erste Stempelkopf 32 ragt über die Stirnseite 48 des Blechpakets 10 hinaus. FIG 6 zeigt nun in einer schematischen Darstellung wie die FIG 4 und 5, die Situation gemäß einem vierten Betriebszustand, wenn der dritte Stempelkopf 36 ebenfalls durch die Aufnahmeöffnung 14 hindurchgeführt worden ist. Mit dem Hindurchführen eines jeweiligen der Stempelköpfe 32, 34, 36 wird das jeweilige Teilpaket 38, 40, 42 an Windungen 18 jeweils in die entsprechenden Längsnuten 16 eingezogen.

Aus den FIG nicht ersichtlich ist, dass, nachdem die Wicklung 12 in die Längsnuten 16 eingezogen worden ist, die Stempelköpfe 32, 34, 36 durch die Aufnahmeöffnung 14 hindurch zurückgezogen werden, woraufhin die Windungen 18 der Wicklung 12 in den jeweiligen Längsnuten 16 verbleiben. Nachdem die Stempelköpfe 32, 34, 36 zurückgezogen worden sind, kann in einem nicht weiter dargestellten folgenden Schritt, vorzugsweise unter Einwirkung eines Wicklungskopfwerkzeugs, ein jeweiliger erster beziehungsweise zweiter Wicklungskopf an den gegenüberliegenden axialen Wicklungsenden 28 beziehungsweise an den Stirnseiten 48, 50 des Blechpakets 10 geformt werden.

Ebenfalls nicht ersichtlich aus den FIG ist, dass beim Einziehen der Wicklung 12 in das Blechpaket 10 Einziehlamellen eingesetzt werden, die ausgebildet sind, während des Einziehens der Wicklung 12 teilweise in Längsnuten hineinzuragen. Dadurch kann das Einziehen unterstützt werden, sodass eine Kraft, die insbesondere auf die einzelnen Windungen 18 einwirken kann, reduziert werden kann.

Aus der schematischen Darstellung der FIG 4 bis 6 ist ersichtlich, dass die Stempelköpfe 32, 34, 36 natürlich auch teilweise unabhängig voneinander axial bewegt werden können. Die Antriebsstange 60 ist zu diesem Zweck dann beispielsweise hülsenförmig ausgebildet und kann drei voneinander unabhängig axial bewegbare Antriebsstangen aufweisen, wobei ein Ende einer jeweiligen Antriebsstange mit einem der Stempelköpfe 32, 34, 36 mechanisch verbunden ist.

Aus den FIG ebenfalls nicht ersichtlich ist, dass die Stempelköpfe 32, 34, 36 vorliegend radiale Vorsprünge aufweisen, die ausgebildet sind, beim Hindurchführen der Stempelköpfe 32, 34, 36 durch die Aufnahmeöffnung 14 teilweise in die Längsnuten 16 einzugreifen. Dadurch ist es möglich, die Längsnuten 16 beim Einziehen der Windungen 18 zumindest teilweise kurzzeitig zu verschließen, sodass das Einführen der Windungen 18 in die Längsnuten 16 unterstütz werden kann.

Auch wenn vorliegend vorgesehen ist, dass die Längsnuten 16 parallel zur Längsachse 46 ausgebildet sind, kann bei alternativen Ausgestaltungen vorgesehen sein, dass die Längsnuten 16 geschrägt gegenüber der Längsachse 46 ausgebildet sind. Das erfindungsgemäße Verfahren kann jedoch gleichermaßen zum Einsatz kommen. Besonders vorteilhaft erweist sich dann, wenn die Stempelköpfe 32, 34, 36 die radialen Vorsprünge aufweisen, die es zugleich ermöglichen, die Stempelköpfe 32, 34, 36 beim Einführen der Windungen 18 in die Längsnuten 16 zu drehen. Eine separate Drehwinkelsteuerung für die Stempelköpfe 32, 34, 36 braucht daher dann nicht vorgesehen zu sein.

Durch das gestaffelte Einziehen der Wicklung 12 in das Blechpaket 10 kann also erreicht werden, dass die Windungen 18 beim Anordnen in den Vorrichtungsnuten 20 der Vorrichtungshülse 22 kürzer vorgesehen werden können, sodass auch die Wicklungsköpfe kompakter ausgebildet werden können. Insgesamt kann dadurch die Leistungsfähigkeit der rotierenden elektrischen Maschine verbessert werden.

Die Teilpakete 38, 40, 42 können eine gemeinsame Wicklung 12 ausbilden. Es kann jedoch auch vorgesehen sein, dass die Teilpakete 38, 40, 42 Teilwicklungen der Wicklung 12 ausbilden, die im bestimmungsgemäßen Betrieb zum Beispiel mit unterschiedlichen elektrischen Spannungen beaufschlagt werden können, wie dies zum Beispiel bei einer dreiphasigen Wechselspannungsmaschine der Fall ist. Es kann vorgesehen sein, dass die Teilpakete 38, 40, 42 bereits beim Einziehen elektrisch miteinander verbunden sind. Es kann aber auch vorgesehen sein, dass die elektrische Verbindung erst nach dem Einziehen hergestellt wird, sofern dies schaltungstechnisch erforderlich ist.

Die Ausführungsbeispiele dienen ausschließlich der Erläuterung der Erfindung und sollen diese nicht beschränken.

## Patentansprüche

1. Verfahren zum Einziehen einer Wicklung (12) in einen magnetisierbaren Flussleitkörper (10) eines Ständers einer als Innenläufer ausgebildeten rotierenden elektrischen Maschine, wobei der magnetisierbare Flussleitkörper (10) eine Aufnahmeöffnung (14) zum Aufnehmen eines drehbar gelagerten Läufers der rotierenden elektrischen Maschine und öffnungsseitig offene Längsnuten (16) zum Anordnen der Wicklung (12) aufweist, wobei:
- Windungen (18) der Wicklung (12) in vorgegebener Weise in Vorrichtungsnuten (20) einer Vorrichtungshülse (22) einer Wickelvorrichtung (24) angeordnet werden, wobei die Vorrichtungsnuten (20) über einen Umfang der Vorrichtungshülse (22) ausgebildet sind und hinsichtlich ihrer radialen Erstreckung und ihrer Erstreckung in Umfangsrichtung an die Längsnuten (16) angepasst sind, wodurch in einem Bereich eines ersten axialen Hülsenendes (26) der Vorrichtungshülse (22) ein erstes axiales Wicklungsende (28) der Wicklung (12) ausgebildet wird,
- innerhalb der Vorrichtungshülse (22) ein axial bewegbarer Vorrichtungsstempel (30) entfernt vom ersten axialen Hülsenende (26) angeordnet wird,
- die Vorrichtungshülse (22) mit ihrem ersten axialen Hülsenende (26) koaxial zu der Aufnahmeöffnung (14) angeordnet wird,
- der Vorrichtungsstempel (30) axial in Richtung der Aufnahmeöffnung (14) durch die Aufnahmeöffnung (14) hindurchbewegt wird,
**dadurch gekennzeichnet, dass**
- ein erster Stempelkopf (32) des Vorrichtungsstempels (30) ein erstes Teilpaket (38) an Windungen (18) des ersten Wicklungsendes (28) durch die Aufnahmeöffnung (14) hindurchführt, wodurch das erste Teilpaket (38) der Windungen (18) in die Längsnuten (16) eingezogen wird, und
- wenigstens ein zweiter Stempelkopf (34) des Vorrichtungsstempels (30), der vom ersten Stempelkopf (32) in axialer Richtung (44) beabstandet ist, ein zweites Teilpaket (40) an Windungen (18) des ersten Wicklungsendes (28) durch die Aufnahmeöffnung (14) hindurchführt, wodurch das zweite Teilpaket (40) der Windungen (18) in die Längsnuten (16) eingezogen wird.

2. Verfahren nach Anspruch 1, **dadurch gekennzeichnet, dass** eine Nutbreite einer jeweiligen der Längsnuten (16) in Umfangsrichtung öffnungsseitig kleiner als die Nutbreite der jeweiligen Längsnut (16) radial beabstandet von der Öffnung ausgebildet ist, um einen verjüngten Nutbereich auszubilden.

3. Verfahren nach einem der vorhergehenden Ansprüche, **dadurch gekennzeichnet, dass** die Stempelköpfe (32, 34, 36) gemeinsam beabstandet voneinander axial in Richtung der Aufnahmeöffnung (14) durch die Aufnahmeöffnung (14) hindurchbewegt werden.

4. Verfahren nach einem der vorhergehenden Ansprüche, **dadurch gekennzeichnet , dass** zum Anordnen der Windungen (18) der Wicklung (12) in den Vorrichtungsnuten (20) zunächst lediglich ein einziger Stempelkopf (34) entfernt vom ersten axialen Hülsenende (26) in der Vorrichtungshülse (22) angeordnet wird, dann eines der Teilpakete (40) an Windungen (18) in den Vorrichtungsnuten (20) angeordnet wird, danach ein weiterer Stempelkopf (32) entfernt vom ersten axialen Hülsenende (26) in der Vorrichtungshülse (22) angeordnet wird, sodass das erste axiale Wicklungsende (28) des Teilpakets (40) zwischen den beiden Stempelköpfen (32, 34) angeordnet ist und dann ein weiteres der Teilpakete (38) an Windungen (18) in den Vorrichtungsnuten (20) angeordnet wird.

5. Verfahren nach einem der vorhergehenden Ansprüche, **dadurch gekennzeichnet, dass** nach dem Einziehen der Wicklung (12) in den magnetisierbaren Flussleitkörper (10) aus dem ersten axialen Wicklungsende (28) ein erster Wicklungskopf und aus einem dem ersten axialen Wicklungsende (28) axial gegenüberliegenden zweiten Wicklungsende ein zweiter Wicklungskopf geformt wird.

6. Verfahren nach einem der vorhergehenden Ansprüche, **dadurch gekennzeichnet, dass** zum Einziehen der Wicklung (12) in den magnetisierbaren Flussleitkörper (10) Einziehlamellen eingesetzt werden, die ausgebildet sind, während des Einziehens der Wicklung (12) zumindest teilweise in die Längsnuten (16) hinzuragen.

7. Wickelvorrichtung (24) zum Einziehen einer Wicklung (12) in einen magnetisierbaren Flussleitkörper (10) eines Ständers einer als Innenläufer ausgebildeten rotierenden elektrischen Maschine, wobei der magnetisierbare Flussleitkörper (10) eine Aufnahmeöffnung (14) zum Aufnehmen eines drehbar gelagerten Läufers der rotierenden elektrischen Maschine und öffnungsseitig offene Längsnuten (16) zum Anordnen der Wicklung (12) aufweist, mit:
- einer Vorrichtungshülse (22), die Vorrichtungsnuten (20) zum Anordnen von Windungen (18) der Wicklung (12) in einer vorgegebenen Weise aufweist, wobei die Vorrichtungsnuten (20) über einen Umfang der Vorrichtungshülse (22) ausgebildet sind und hinsichtlich ihrer radialen Erstreckung und ihrer Erstreckung in Umfangsrichtung an die Längsnuten (16) angepasst sind, um in einem Bereich eines ersten axialen Hülsenendes (26) der Vorrichtungshülse (22) ein erstes axiales Wicklungsende (28) der Wicklung (12) auszubilden, und
- einem Vorrichtungsstempel (30), der innerhalb der Vorrichtungshülse (22) axial bewegbar angeordnet und ausgebildet ist, axial in Richtung der Aufnahmeöffnung (14) durch die Aufnahmeöffnung (14) hindurchbewegt zu werden, wenn die Vorrichtungshülse (22) mit ihrem ersten axialen Hülsenende (26) koaxial zu der Aufnahmeöffnung (14) angeordnet ist,
**dadurch gekennzeichnet, dass** der Vorrichtungsstempel (30)
- einen ersten Stempelkopf (32), der ausgebildet ist, ein erstes Teilpaket (38) an Windungen (18) des ersten Wicklungsendes (28) durch die Aufnahmeöffnung (14) hindurchzuführen, um das erste Teilpaket (38) der Windungen (18) in die Längsnuten (16) einzuziehen, und
- wenigstens einen zweiten Stempelkopf (34) aufweist, der vom ersten Stempelkopf (32) in axialer Richtung (44) beabstandet ist und der ausgebildet ist, ein zweites Teilpaket (40) an Windungen (18) des ersten Wicklungsendes (28) durch die Aufnahmeöffnung (14) hindurchzuführen, um das zweite Teilpaket (40) der Windungen (18) in die Längsnuten (16) einzuziehen.

8. Wickelvorrichtung nach 7, **dadurch gekennzeichnet, dass** die Stempelköpfe (32, 34, 36) radiale Vorsprünge aufweisen, die ausgebildet sind, beim Hindurchführen der Stempelköpfe (32, 34, 36) durch die Aufnahmeöffnung (14) zumindest teilweise in die Längsnuten (16) einzugreifen.

9. Wickelvorrichtung nach Anspruch 7 oder 8, **dadurch gekennzeichnet, dass** eine Öffnungsbreite der Längsnuten (16) in Umfangsrichtung größer als eine Öffnungsbreite der Vorrichtungsnuten (20) in Umfangsrichtung ist.

10. Wickelvorrichtung nach einem der Ansprüche 7 bis 9,
**dadurch gekennzeichnet, dass** die Stempelköpfe (32, 34, 36) zumindest teilweise unabhängig voneinander bewegbar sind.

11. Dynamoelektrische Maschine hergestellt nach einem Verfahren gemäß den Ansprüchen 1 bis 6 und/oder durch eine Wickelvorrichtung gemäß den Ansprüchen 7 bis 10.

12. Verwendung einer dynamoelektrischen Maschine nach Anspruch 11 als Antrieb für Verdichter, Pumpen, Kompressoren, Lüftern etc., im industriellen Umfeld, in der Nahrungsmittelindustrie, im medizinischen Sektor etc.
